# EUROPÄISCHE PATENTSCHRIFT

(11) **EP 0 341 653 B1**
(45) Veröffentlichungstag und Bekanntmachung des Hinweises auf die Patenterteilung: **27.01.1993**
(21) Anmeldenummer: 89108312.3
(22) Anmeldetag: 09.05.1989
(51) Int. Cl.: F16D 27/01, F16D 27/10

(54) **Antriebseinrichtung mit einer elektromagnetisch betätigten Doppelkupplung**
Drive arrangement with an electromagnetically actuating double clutch
Dispositif de transmission avec embrayage double commandé électromagnétiquement

(30) Priorität: 13.05.1988 DE 3816302
(43) Veröffentlichungstag der Anmeldung: 15.11.1989
(73) Patentinhaber: ZF FRIEDRICHSHAFEN Aktiengesellschaft, 88038 Friedrichshafen (DE)
(72) Erfinder: Schneider, Rudolf, D-7996 Meckenbeuren (DE)

(56) Entgegenhaltungen:
- DE-A- 1 575 907
- FR-A- 2 551 156
- FR-E- 66 453
- US-A- 3 175 665
- US-A- 3 233 473

## Beschreibung

Die Erfindung bezieht sich auf eine Antriebseinrichtung mit einer elektromagnetisch betätigten Doppelkupplung, an deren drehfest und axial verschiebbar auf einer Getriebewelle angeordnetem Anker wahlweise zwei frei drehbar auf der Getriebewelle gelagerte Antriebsräder kuppelbar sind, wobei der Anker zwischen den Antriebsrädern angeordnet und von einem Magnetfeld einer stromdurchflossenen Magnetspule in eine Einkuppelstellung des ersten Antriebsrades bewegbar ist.

Eine Antriebseinrichtung der vorgenannten Gattung ist aus der DE-OS 14 25 811 bekannt. Danach weist ein auf der Getriebewelle angeordneter Anker zwei separate Ankerscheiben auf, die mittels einer ringförmigen Nabe in einem gewünschten Abstand zueinandergehalten werden. Mit jeder der Ankerscheiben wirkt jeweils eine Magnetspule zusammen, so daß der Anker in Richtung der jeweils erregten Magnetspule verschoben und an dem die Magnetspule aufnehmenden jeweiligen Sekundärteil eingekuppelt wird. Die Stromzufuhr zu jeder der beiden Magnetspulen erfolgt mittels Schleifringen, die auf Naben der Antriebsräder angeordnet sind. Bei einem weiteren Ausführungsbeispiel der elektromagnetisch betätigten Doppelkupplung sind zwei Ankerscheiben an der ringförmigen Nabe über eine die Verschiebung des Ankers gestattende federnde Membran befestigt. Aufgrund der mehrteiligen Ausbildung des Ankers und der Verwendung zweier Magnetspulen sowie zweier Schleifringe ist der bauliche Aufwand für die Herstellung einer derartigen Kupplung relativ hoch und eine derartige, in zwei Übersetzungsstufen umschaltbare Antriebseinrichtung weist ungünstige axiale Abmessungen auf. Außerdem kann bei Ausfall der Stromversorgung die Antriebseinrichtung nicht weiterbetrieben werden, da dann beide Antriebsräder ausgekuppelt sind.

Aus der FR-A-2551156 ist eine Antriebseinrichtung mit einer elektromagnetisch betätigbaren Doppelkupplung bekannt geworden. Es sind zwei auf einer Getriebewelle frei drehbar gelagerte Antriebsräder vorgesehen. Jedem der Antriebsräder ist eine stromdurchflossene Magnetspule und ein Dauermagnet zugeordnet. Durch einen kurzen Stromimpuls wird ein Anker mit einem der Antriebsräder gekuppelt. Der Dauermagnet hält den Anker in der Einkuppelstellung. Auch bei dieser bekannten Anordnung ist der bauliche Aufwand und die axiale Baulänge relativ hoch.

Der Erfindung liegt daher die Aufgabe zugrunde, den Bauaufwand und die axiale Abmessung einer derartigen Antriebseinrichtung zu reduzieren, wobei weiterhin ein Notbetrieb derselben auch bei Ausfall der Stromversorgung möglich sein soll.

Diese Aufgabe wird an einer Antriebseinrichtung der genannten Gattung nach dem kennzeichnenden Teil des Anspruches 1 dadurch gelöst, daß der Anker als einzige an beiden Stirnseiten mit reib- oder formschlüssigen Kuppelflächen versehene Ankerscheibe ausgebildet ist und daß das andere Antriebsrad einen Dauermagneten aufnimmt, über den die Ankerscheibe bei stromloser Magnetspule in eine Einkuppelstellung des zweiten Antriebsrades bewegbar ist. Bei stromloser Magnetspule wird nunmehr durch das Magnetfeld des Dauermagneten eine Zugkraft auf die Ankerscheibe ausgeübt, so daß die Ankerscheibe sich axial verschiebt bis zur Anlage am zweiten Antriebsrad. Ist die dem Dauermagneten gegenüberliegende Magnetspule stromdurchflossen, so baut sie ein Gegenfeld auf, das die Kraftwirkung des Dauermagneten aufhebt. Es können demnach unter Verwendung einer Magnetspule und einer entsprechend einfachen Stromzuführung zwei unterschiedliche Übersetzungsstufen der Antriebseinrichtung geschaltet werden. Bei einem Stromausfall ist auf jeden Fall das zweite Antriebsrad unter der Wirkung des Dauermagneten mit der Getriebewelle verbunden, so daß die Antriebseinrichtung weiterbetrieben werden kann.

Aus der Druckschrift "ZF-Schleifringlose Einflächenkupplungen und -Einflächenbremsen, ZF-Kupplungs-Bremseinheiten, ZF-Zweistufen-Kupplungen", Katalog KB 1, 1986, Drucknummer F 5/1 ME 865004, ist gemäß Seite 13, Bilder 26 und 27, zwar eine Antriebseinrichtung bekannt, bei welcher eine Arbeitsstromkupplung zur Verbindung einer Getriebewelle mit einem Antriebsrad dient; ein weiteres Antriebsrad ist aber nicht vorgesehen, statt dessen wird das einzige Antriebsrad von einer einen Dauermagnet aufweisenden Bremse bei abgestellter Maschine festgelegt. Der Dauermagnet weist dabei eine zusätzliche Magnetspule auf, die stromdurchflossen ein Gegenfeld zum Dauermagnet aufbaut. Auf der Seite 33 dieser Druckschrift sind außerdem Doppelkupplungen mit zwei an eine Getriebewelle kuppelbaren Antriebsrädern dargestellt, die aber zwei abwechselnd stromdurchflossene Magnetspulen aufweisen. An jedem der Antriebsräder ist jeweils axial federnd eine Ankerscheibe befestigt, die unter der Wirkung der entsprechenden Magnetspule an einen auf der Getriebewelle drehfest angeordneten Rotor gekuppelt wird. Die Antriebseinrichtung ist in ihrem Aufbau aufwendig und läßt keinen Betrieb im stromlosen Zustand zu.

In weiterer Ausgestaltung der Erfindung soll gemäß Anspruch 2 ein gehäusefester Lagerflansch die Magnetspule aufnehmen, und es soll das erste Antriebsrad zwischen dem Lagerflansch und der Ankerscheibe angeordnet sein. Auf diese Weise ergibt sich eine räumlich günstige Anordnung der Bauelemente der Antriebseinrichtung, wobei die Magnetspule schleifringlos stromversorgt werden kann.

Zur weiteren Erläuterung der Erfindung wird auf die Zeichnung verwiesen, in der ein Ausführungsbeispiel dargestellt ist.

Es zeigen:
Fig. 1 einen Längsschnitt durch die obere Hälfte einer erfindungsgemäßen Antriebseinrichtung, bei der eine Ankerscheibe unter der Wirkung eines Dauermagneten an ein Antriebsrad gekuppelt ist und
Fig. 2 einen Längsschnitt durch eine entsprechende untere Hälfte der Antriebseinrichtung, wobei die Ankerscheibe unter der Wirkung einer stromdurchflossenen Magnetspule an ein Antriebsrad gekuppelt ist.

In den Figuren ist mit 1 eine als Hohlwelle ausgebildete Getriebewelle bezeichnet, die über Kugellager 2 und 3 in einem Lagerflansch 4 gelagert ist. Dieser Lagerflansch 4 ist an einem abschnittsweise dargestellten Gehäuse 5 befestigt und ist Bestandteil einer elektromagnetischen Kupplung 6. Dabei nimmt der Lagerflansch 4 eine Magnetspule 7 auf, die über eine Leitung 8 mit einer nicht näher dargestellten Stromversorgungseinrichtung verbunden ist. Die Getriebewelle 1 hat einen eine Außenverzahnung 9 aufweisenden Bund 10 und auf dieser Außenverzahnung 9 ist eine Ankerscheibe 11 axial verschiebbar, aber drehfest angeordnet. Die Ankerscheibe 11 weist stirnseitig Kuppelflächen 12 und 13 auf. Zwischen der Kuppelfläche 12 und dem Lagerflansch 4 bzw. der Magnetspule 7 ist ein erstes Antriebsrad 14 auf der Getriebewelle 1 gelagert. An der anderen Kuppelfläche 13 befindet sich ein ebenfalls auf der Getriebewelle 1 gelagertes zweites Antriebsrad 15. Beide Antriebsräder 14 und 15 nehmen abschnittsweise dargestellte Treibriemen 16 und 17 auf, die zu in den Figuren nicht dargestellten weiteren Riemenscheiben führen. Innerhalb des zweiten Antriebsrades 15 ist ein Dauermagnet 18 angeordnet.

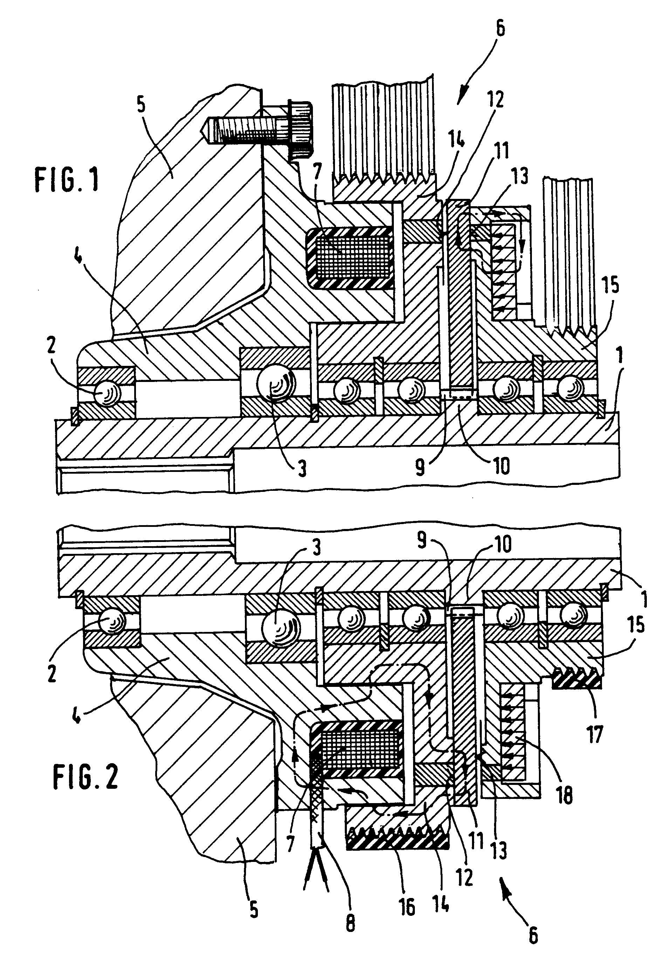

Wenn über die elektromagnetische Kupplung 6 eine reibschlüssige Verbindung zwischen der Getriebewelle 1 und dem ersten Antriebsrad 14 hergestellt werden soll, so wird die Magnetspule 7 über die Leitung 8 mit Strom versorgt. Die Magnetspule 7 bewirkt den in der Fig. 2 dargestellten Magnetfluß, bei dem die Ankerscheibe magnetisch durchflutet ist. Dabei baut die Magnetspule 7 ein Gegenfeld auf, das die Kraftwirkung des Dauermagneten 18 aufhebt. In dieser Stellung sind die Ankerscheibe 11 und das erste Antriebsrad 14 aneinandergekuppelt. Ist die Stromzufuhr zur Magnetspule 7 unterbrochen, wie in Fig. 1 dargestellt, so ist deren Kraftwirkung und Gegenfeld zum Dauermagneten 18 aufgehoben und folglich wird die Ankerscheibe 11 unter der Wirkung des Dauermagneten 18 auf der Getriebewelle 1 axial so weit verschoben, daß eine reibschlüssige Verbindung zwischen der Ankerscheibe 11 und dem zweiten Antriebsrad 15 eintritt.

Eine derartige Umschaltung der Antriebseinrichtung auf zwei unterschiedliche Übersetzungsstufen erfolgt in vorteilhafter Weise mit nur einer Magnetspule und entsprechend nur einer gesteuerten Stromversorgung. Bei Ausfall der Stromversorgung ist die Ankerscheibe unter der Wirkung des Dauermagneten 18 stets mit dem zweiten Antriebsrad 15 verbunden, so daß die Möglichkeit eines Notbetriebs besteht. Der Zeichnung ist zu entnehmen, daß aufgrund der Reduzierung der verwendeten Bauelemente die Antriebseinrichtung sehr kompakt, d. h. mit geringer axialer Baulänge ausgebildet werden kann.

### Bezugszeichen

- 1: Getriebewelle
- 2: Kugellager
- 3: Kugellager
- 4: Lagerflansch
- 5: Gehäuse
- 6: elektromagnetisch betätigte Doppelkupplung
- 7: Magnetspule
- 8: Leitung
- 9: Außenverzahnung
- 10: Bund
- 11: Ankerscheibe
- 12: Kuppelfläche
- 13: Kuppelfläche
- 14: erstes Antriebsrad
- 15: zweites Antriebsrad
- 16: Treibriemen
- 17: Treibriemen
- 18: Dauermagnet

## Patentansprüche

1. Antriebseinrichtung mit einer elektromagnetisch betätigten Doppelkupplung (6), an deren drehfest und axial verschiebbar auf einer Getriebewelle (1) angeordnetem Anker wahlweise zwei frei drehbar auf der Getriebewelle (1) gelagerte Antriebsräder (14 und 15) kuppelbar sind, wobei der Anker zwischen den Antriebsrädern angeordnet und von einem Magnetfeld einer stromdurchflossenen Magnetspule (7) in eine Einkuppelstellung des ersten Antriebsrades (14) bewegbar ist, dadurch **gekennzeichnet,** daß der Anker als einzige an beiden Stirnseiten mit reib- oder formschlüssigen Kuppelflächen (12 und 13) versehene Ankerscheibe (11) ausgebildet ist und daß das zweite Antriebsrad (15) einen Dauermagneten (18) aufnimmt, über den die Ankerscheibe (11) bei stromloser Magnetspule (7) in eine Einkuppelstellung des zweiten Antriebsrades (15) bewegbar ist.

2. Antriebseinrichtung nach Anspruch 1, dadurch **gekennzeichnet,** daß ein gehäusefester Lagerflansch (4) die Magnetspule (7) aufnimmt und daß das erste Antriebsrad (14) zwischen dem Lagerflansch (4) und der Ankerscheibe (11) angeordnet ist.

## Claims

1. Drive device having an electromagnetically operated double clutch (6), with whose armature, disposed non-rotatably and axially displaceably on a transmission shaft (1), two drive wheels (14 and 15) mounted so as to be freely rotatable on the transmission shaft (1) may be selectively engaged, the armature being disposed between the drive wheels and being movable by a magnetic field of a current-carrying magnet coil (7) into a clutch position of the first drive wheel (14), **characterized** in that the armature takes the form of a single armature disk (11) provided at both end faces with frictionally or positively locking coupling faces (12 and 13), and that the second drive wheel (15) accommodates a permanent magnet (18), by means of which the armature disk (11) is movable, when the magnet coil (7) is de-energized, into a clutch position of the second drive wheel (15).

2. Drive device according to claim 1,
**characterized** in that a housing-fixed bearing flange (4) accommodates the magnet coil (7), and that the first drive wheel (14) is disposed between the bearing flange (4) and the armature disk (11).

## Revendications

1. Dispositif de transmission à embrayage double (6) commandé électromagnétiquement et pourvu d'une armature qui est montée de manière fixe en rotation et coulissante axialement sur un arbre de transmission (1) et à laquelle peuvent être couplées sélectivement deux roues d'entraînement (14 et 15) librement rotatives sur l'arbre de transmission (1), où l'armature est disposée entre les roues d'entraînement et peut être déplacée par un champ magnétique d'une première bobine d'excitation (7), quand celle-ci est excitée, jusqu'à une position d'embrayage sur la première roue d'entraînement (14), **caractérisé** en ce que l'armature est constituée par un unique disque d'armature (11) pourvu de surfaces d'embrayage (12 et 13) à friction ou à engagement positif sur ses deux faces frontales et en ce que la seconde roue d'entraînement (15) porte un aimant permanent (18) au moyen duquel le disque d'armature (11) est déplacé jusqu'à une position d'embrayage sur la seconde roue d'entraînement (15) quand ladite bobine (7) n'est pas excitée.

2. Dispositif de transmission selon la revendication 1, **caractérisé** en ce que la bobine d'excitation (7) est montée sur un flasque (4) fixe et en ce que la première roue d'entraînement (14) se trouve entre ledit flasque (4) et le disque d'armature (11).
